(19) Europäisches Patentamt
European Patent Office
Office européen des brevets

(11) **EP 4 280 770 A1**

(12) **EUROPEAN PATENT APPLICATION**
published in accordance with Art. 153(4) EPC

(43) Date of publication:
**22.11.2023 Bulletin 2023/47**

(21) Application number: **22739654.6**

(22) Date of filing: **12.01.2022**

(51) International Patent Classification (IPC):
**H04W 72/12** (2023.01)    **H04L 5/00** (2006.01)
**H04L 1/18** (2023.01)    **H04L 1/16** (2023.01)
**H04L 1/00** (2006.01)

(52) Cooperative Patent Classification (CPC):
**H04L 1/00; H04L 1/16; H04L 1/18; H04L 5/00;
H04W 72/12**

(86) International application number:
**PCT/KR2022/000534**

(87) International publication number:
**WO 2022/154459 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021 KR 20210006195**

(71) Applicant: **LG Electronics Inc.**
**Yeongdeungpo-gu
Seoul 07336 (KR)**

(72) Inventors:
• **KIM, Seonwook**
**Seoul 06772 (KR)**
• **YANG, Suckchel**
**Seoul 06772 (KR)**
• **BAE, Duckhyun**
**Seoul 06772 (KR)**

(74) Representative: **Plasseraud IP**
**66, rue de la Chaussée d'Antin
75440 Paris Cedex 09 (FR)**

(54) **METHOD AND DEVICE FOR UPLINK TRANSMISSION AND RECEPTION IN WIRELESS COMMUNICATION SYSTEM**

(57)    Disclosed are a method and a device for transmitting and receiving an uplink in a wireless communication system. A method for transmitting an uplink by a terminal according to an embodiment of the present disclosure may comprise the steps of: receiving, from a base station, multiplexing indication information indicating whether to multiplex multiple pieces of UCI having different priorities and transmitted through a specific uplink channel; and on the basis that first multiplexing indication information among multiple pieces of the multiplexing indication information indicates multiplexing and second multiplexing indication information thereof does not indicate multiplexing, transmitting at least one of the multiple pieces of UCI on the specific uplink channel to the base station according to specific multiplexing indication information among the multiple pieces of multiplexing indication information.

FIG.9

RECEIVING, FROM THE BASE STATION, A PLURALITY OF MULTIPLEXING INDICATION INFORMATION INDICATING WHETHER MULTIPLEXING OF A PLURALITY OF UCI HAVING DIFFERENT PRIORITIES TRANSMITTED ON A SPECIFIC UPLINK CHANNEL IS PERFORMED — S910

TRANSMITTING AT LEAST ONE OF A PLURALITY OF UCIS TO A BASE STATION THROUGH A SPECIFIC UPLINK CHANNEL ACCORDING TO SPECIFIC MULTIPLEXING INDICATION INFORMATION AMONG A PLURALITY OF MULTIPLEXING INDICATION INFORMATION — S920

EP 4 280 770 A1

**Description**

[Technical Field]

The present disclosure relates to a wireless communication system, and more particularly, to a method and apparatus for transmitting and receiving an uplink in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for transmitting and receiving an uplink in a wireless communication system.

In addition, an additional technical object of the present disclosure is to provide a method and apparatus for indicating whether to multiplex multiple uplink control information having different priorities.

The technical objects to be achieved by the present disclosure are not limited to the above-described technical objects, and other technical objects which are not described herein will be clearly understood by those skilled in the pertinent art from the following

description.

[Technical Solution]

In an embodiment of the present disclosure, a method for performing uplink transmission by a user equipment (UE) in a wireless communication system may include receiving, from a base station, a plurality of multiplexing indication information indicating whether multiplexing of a plurality of uplink control information (UCI) having different priorities transmitted in a specific uplink channel is performed; and based on first multiplexing indication information indicating multiplexing and second multiplexing indication information not indicating multiplexing among the plurality of multiplexing indication information, transmitting, to the base station, at least one of the plurality of UCIs through the specific uplink channel according to specific multiplexing indication information among the plurality of multiplexing indication information.

In an embodiment of the present disclosure, a method for performing uplink reception by a base station in a wireless communication system may include transmitting, to a user equipment (UE), a plurality of multiplexing indication information indicating whether multiplexing of a plurality of uplink control information (UCI) having different priorities transmitted in a specific uplink channel is performed; and based on first multiplexing indication information indicating multiplexing and second multiplexing indication information not indicating multiplexing among the plurality of multiplexing indication information, receiving, from the UE, at least one of the plurality of UCIs through the specific uplink channel according to specific multiplexing indication information among the plurality of multiplexing indication information.

[Technical Effects]

According to an embodiment of the present disclosure, a method and apparatus for performing uplink transmission and reception in a wireless communication system may be provided.

According to an embodiment of the present disclosure, a method and apparatus for indicating whether to multiplex multiple uplink control information having different priorities may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a hybrid automatic repeat and request (HARQ) transmission method to which the present disclosure may be applied.
FIG. 8 illustrates a transmission process of uplink control information to which the present disclosure may be applied.
FIG. 9 is a diagram for describing an uplink transmission operation of a terminal according to an embodiment of the present disclosure.
FIG. 10 is a diagram for describing an uplink reception operation of a base station according to an embodiment of the present disclosure.
FIG. 11 is a diagram for describing a signaling procedure of a network side and a terminal to which the present disclosure may be applied.
FIG. 12 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform

- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

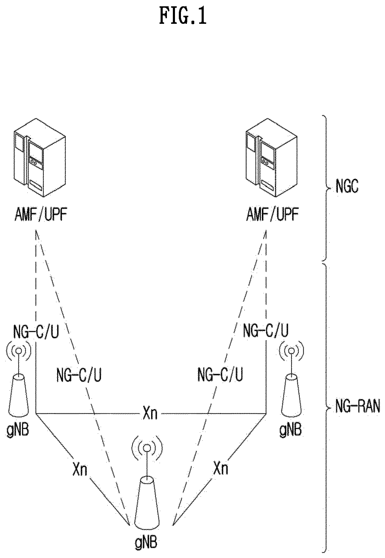

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

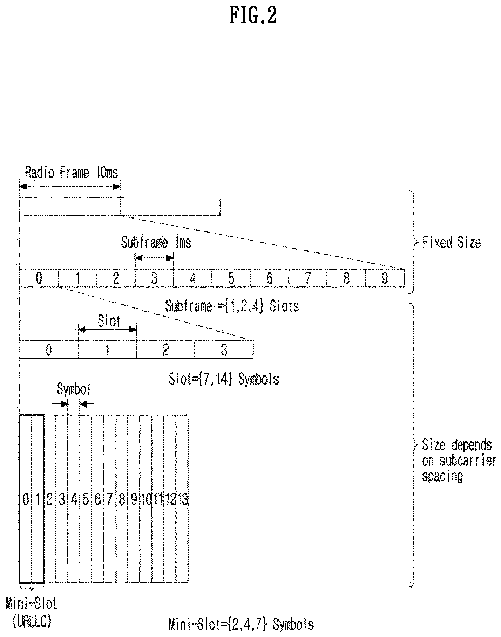

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=$2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2) . FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c=10ms$. Here, a radio frame is configured with 10 subframes having a duration of $T_{sf}=(\Delta f_{max}N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

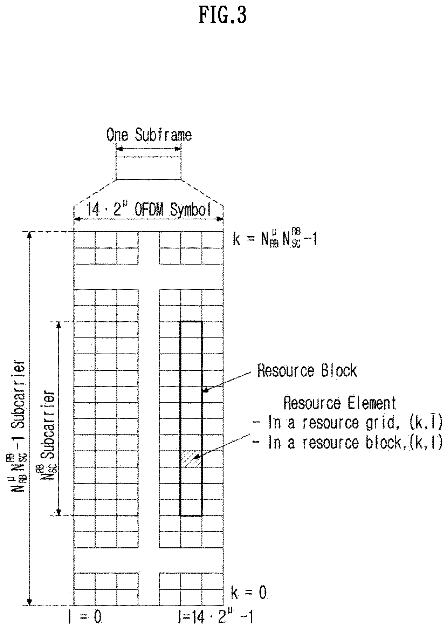

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL (quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and l' =0, ...,$2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain. Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

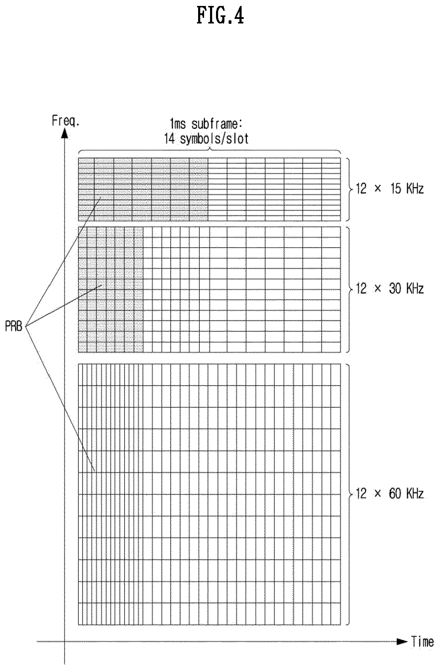

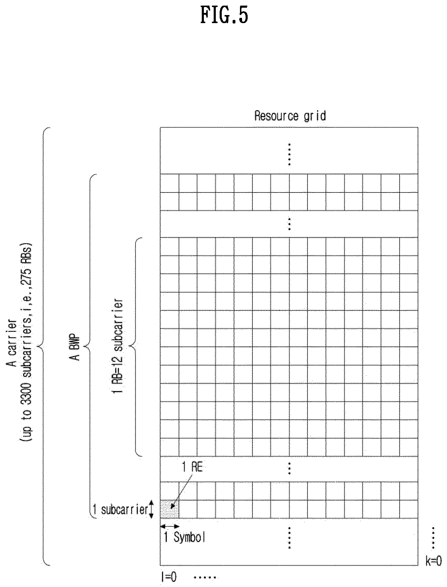

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

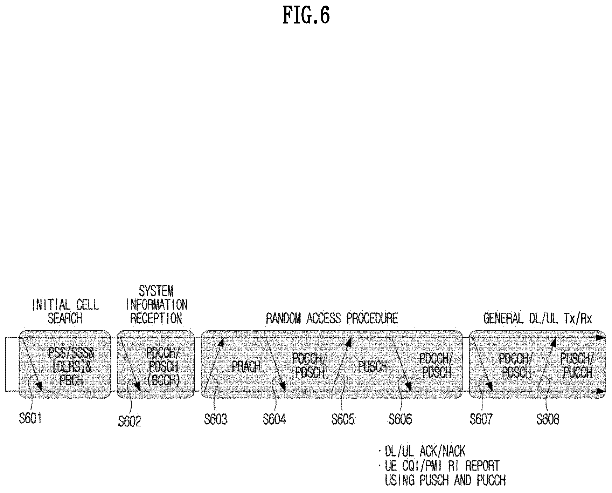

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606) . For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

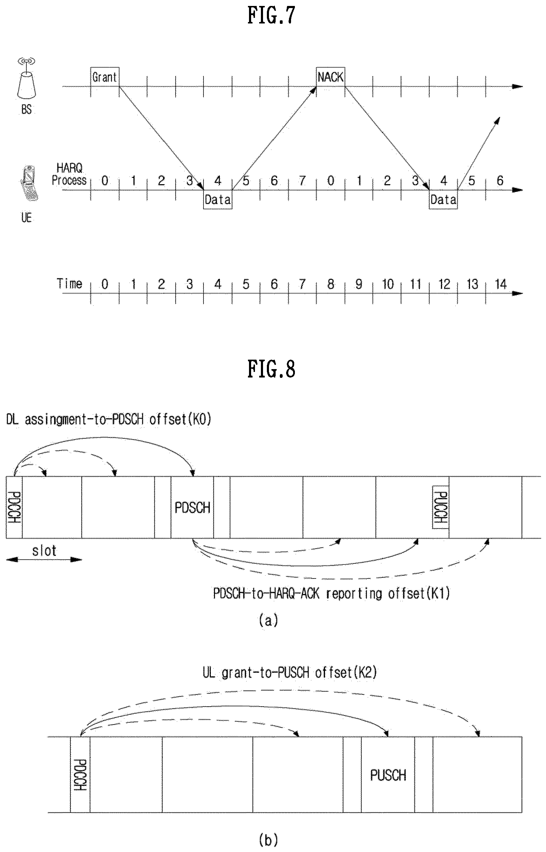

FIG. 7 illustrates a hybrid automatic repeat and request (HARQ) transmission method to which the present disclosure may be applied.

In a wireless communication system, when there are a plurality of UEs having data to be transmitted through uplink (UL)/downlink (DL), the base station may select a UE to transmit data for each transmission time interval (TTI) (e.g., subframe, slot). In a multi-carrier and similarly operated wireless communication system, the base station may select UEs to transmit data through UL/DL for each TTI, and may also select a frequency band to be used by the UE for data transmission.

For example, UEs may transmit RSs (or pilot signals) through UL, and a base station may determine channel conditions of UEs using RSs (or pilot signals) transmitted from UEs. In addition, the base station may select UEs to transmit data in UL in a unit frequency band for each TTI, and transmit a selection result to the UE. That is, the base station may transmit an uplink assignment message (i.e., a UL grant message) to a UE scheduled for UL in a specific TTI by using a specific frequency band.

The UE may transmit data to the base station according to the UL grant message. Here, the UL grant message may include, for example, UE Identity, RB allocation information, Modulation and Coding Scheme (MCS), Redundancy Version (RV) version, New Data indication (NDI), etc.

HARQ may include DL HARQ and UL HARQ. DL HARQ may mean DL data on PDSCH transmitted together with HARQ-ACK returned on PUCCH or PUSCH. UL HARQ may mean UL data on PUSCH transmitted together with HARQ-ACK returned on PDCCH.

A plurality of parallel HARQ processes may exist in the base station/UE for DL/UL transmission. A plurality of parallel HARQ processes may allow DL/UL transmission to be continuously performed while waiting for HARQ feedback on successful or non-successful reception of a previous DL/UL transmission.

Each HARQ process may be associated with a medium access control (MAC) layer HARQ buffer. Each HARQ process may manage state variables related to the number of transmissions of MAC physical data blocks (PDUs) in the buffer, HARQ feedback for the MAC PDUs in the buffer, and the current redundancy version.

For example, when using 8-channel HARQ, HARQ process IDs may be provided as 0 to 7. In the synchronous HARQ scheme, HARQ process IDs may be sequentially connected to time units (TUs). On the other hand, in the asynchronous HARQ scheme, the HARQ process ID may be designated by the network (e.g., base station) during data scheduling. Here, the TU may be replaced with a data transmission opportunity (e.g., subframe, slot).

Among the HARQ transmission schemes, an asynchronous HARQ scheme may mean that there is no fixed time pattern for each HARQ process. That is, since the HARQ retransmission time is not predefined, the base station may transmit a retransmission request message to the UE.

Among HARQ transmission schemes, a synchronous HARQ scheme may have a fixed time pattern for each HARQ process. That is, the HARQ retransmission time may be predefined. Therefore, the UL grant message transmitted from the base station to the UE may be transmitted only initially, and subsequent retransmission may be performed by an ACK/NACK signal.

In the case of a non-adaptive HARQ method among HARQ transmission methods, the frequency resource or MCS for retransmission is the same as the previous transmission, but in the case of the adaptive HARQ scheme, the frequency resource or MCS for retransmission may be different from the previous transmission. For example, in the case of the asynchronous adaptive HARQ scheme, since the frequency resource or MCS for retransmission is different for each transmission time, the retransmission request message may include a UE ID, RB allocation information, HARQ process ID / number, RV, and NDI information.

Referring to FIG. 7, a base station (BS) may transmit a UL grant message to a user equipment UE through a PDCCH. The UE may transmit uplink data to the base station through the PUSCH using the RB and MCS designated by the UL grant message after a predetermined time from the time of receiving the UL grant message.

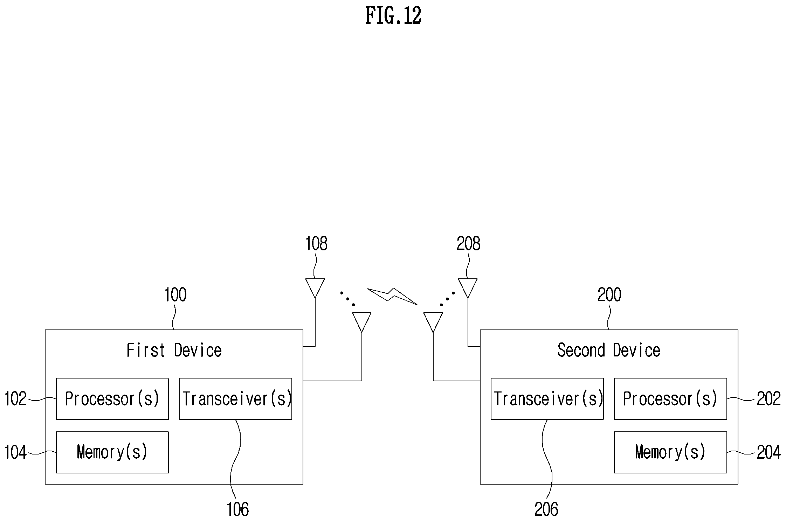

Here, each of the base station and UE shown in FIG. 7 may correspond to one of the first device 100 or the second device 200 to be described with reference to FIG. 12.

The base station may decode UL data received from the UE. If decoding of uplink data fails, the base station may transmit a NACK to the terminal. The UE may retransmit the UL data after a predetermined time from the time of receiving the NACK. Initial transmission and retransmission of UL data may be performed by the same HARQ process (e.g., HARQ process 4).

In the synchronous HARQ scheme, the predetermined time may have a fixed value. On the other hand, in the synchronous HARQ scheme, the predetermined time may be indicated by PDCCH-to-PUSCH timing indication information in a UL grant message.

FIG. 8 illustrates a transmission process of uplink control information to which the present disclosure may be applied.

Referring to (a) of FIG. 8, the UE may detect the PDCCH in slot #n. Here, the PDCCH includes DL scheduling information (e.g., DCI formats 1_0 and 1_1), and the PDCCH may indicate 'DL assignment-to-PDSCH offset (K0)' and 'PDSCH-HARQ-ACK reporting offset (K1)'.

Here, each of K0 and K1 may be indicated by a 'time domain resource assignment (TDRA) field' and a 'PDSCH-to-HARQ feedback timing indicator field' of DCI formats 1_0 and 1_1.

Specifically, the 'TDRA field' may indicate a start position (e.g., OFDM symbol index) and length (e.g., number of OFDM symbols) of a PDSCH in a slot. The 'PDSCH-to-HARQ feedback timing indicator field' may indicate a position at which HARQ-ACK reporting starts after the PDSCH is received.

In addition, DCI formats 1_0 and 1_1 may include a 'PUCCH resource indicator (PRI) field' indicating a PUCCH resource to be used for UCI transmission among a plurality of PUCCH resources included in the PUCCH resource set.

After receiving the PDSCH from the base station in slot # (n + K0) according to the scheduling information of slot #n, the UE may transmit UCI to the base station through PUCCH in slot # (n + K1).

Here, UCI may include HARQ-ACK feedback for PDSCH. When PDSCH is configured to transmit up to 1 TB, HARQ-ACK feedback may consist of 1-bit. When the PDSCH is configured to transmit up to two TBs, the HARQ-ACK feedback may consist of 2-bits if spatial bundling is not configured and 1-bit if spatial bundling is configured. When the HARQ-ACK transmission time for a plurality of PDSCHs is designated as slot # (n + K1), UCI transmitted in slot # (n + K1) may include HARQ-ACK responses for a plurality of PDSCHs.

Referring to (b) of FIG. 8, the UE may detect the PDCCH in slot #n. Here, the PDCCH may include uplink scheduling information (e.g., DCI formats 0_0 and 0_1).

DCI format 0_0,0_1 may include a frequency domain resource assignment (FDRA) field indicating a set of RBs allocated to the PUSCH, a slot offset (K2), and a time domain resource assignment (TDRA) field indicating the start position (e.g., OFDM symbol index) and length of the PUSCH (e.g., number of OFDM symbols) in the slot. Here, the start position and length of the PUSCH may be indicated together or individually through a start and length indicator value (SLIV).

The UE may transmit the PUSCH to the base station in slot #(n+K2) according to the scheduling information of slot #n. Here, PUSCH may include UL-SCH TB. When the PUCCH transmission time and the PUSCH transmission time overlap, the UCI may be transmitted through the PUSCH (i.e., piggybacked to the PUSCH).

Method for indicating whether UCIs having different priorities are multiplexed

URLLC transmission may mean 1) relatively low traffic volume, 2) a relatively low arrival rate, 3) an extremely low latency requirement (e.g., 0.5 ms), 4) a relatively short transmission duration (e.g., 2 OFDM symbols), and 5) a transmission scheme supporting urgent service/message transmission.

In order to support the above-described URLLC transmission, service/protection priorities (e.g., low priority (LP) or high priority (HP)) for each physical layer channel/signal (or transmission resource) and control information (i.e., UCI) may be semi-statically set through RRC signaling or dynamically indicated through DCI/MAC-CE signaling.

The priority may be configured/indicated by a separate priority index. For example, LP may be configured/indicated by a lower priority index, and HP may be configured/indicated by a higher priority index. As another example, LP may be configured/indicated by a lower bit value (e.g., bit '0'), and HP may be configured/indicated by a higher bit value (e.g., bit '1').

As an embodiment, a priority (e.g., LP or HP) may be configured/indicated for each UCI type (e.g., HARQ-ACK, SR (scheduling request), and / or CSI) or for each PUCCH/PUSCH resource configured/indicated for corresponding UCI transmission.

For example, the priority of HARQ-ACK for PDSCH may be indicated through a downlink scheduling DCI that schedules PDSCH. As another example, the priority of aperiodic CSI may be indicated through DCI (e.g., uplink grant DCI for scheduling PUSCH).

As another example, for each priority, 1) PUCCH resource set and/or 2) maximum UCI coding rate for PUCCH transmission, and/or 3) beta offset (e.g., HARQ-ACK, CSI Part 1,2) for UCI encoding on PUSCH, and/or 4) HARQ-ACK codebook may be configured independently.

Whether to map (or transmit) a plurality (e.g., LP or HP) of UCI combinations configured/indicated with different priorities on the same channel (e.g., PUCCH or PUSCH) resource may be configured/indicated in a semi-static or dynamic method. In the present disclosure, a method for indicating whether to map (or transmit) a plurality of UCI combinations configured/indicated with different priorities on the same channel resource is disclosed.

Embodiment 1

Multiplexing of UCIs (i.e., inter-priority) having different priorities may be dynamically indicated through DCI.

When a UE transmits UCIs having different priorities through an uplink channel such as PUCCH or PUSCH at a specific time, from the point of view of the base station, it may be advantageous to select a UCI (e.g., a UCI having a specific priority) required at a given time and dynamically indicate the priority and whether to multiplex between UCIs having different priorities.

When the UE transmits UCIs having different priorities through the PUCCH, whether to multiplex the UCIs may be indicated through the downlink scheduling DCI. For example, whether to multiplex the UCI may be indicated by adding a new bit to the downlink scheduling DCI.

As another example, whether to multiplex the UCI may be indicated by reusing an existing field (e.g., whether to multiplex UCI can be set in advance according to the PRI value/PUCCH resource linked to the PRI) included in the downlink scheduling DCI.

As an embodiment of the present disclosure, if the DCI includes a field indicating a priority (LP or HP) and the priority indicated by the field is XP (e.g., LP or HP), when UCI multiplexing is indicated through the corresponding DCI, the UE may multiplex UCI corresponding to both the LP and the HP and transmit it to the base station through PUCCH (indicated/scheduled with the corresponding DCI).

And, if UCI multiplexing is not indicated through the corresponding DCI, UCI corresponding to XP (or LP or HP previously configured regardless of XP) may be transmitted to the base station through PUCCH (indicated/scheduled as the corresponding DCI). Here, the priority configured in advance regardless of XP may be configured differently according to the format of the corresponding DCI or the uplink/downlink type.

As another embodiment of the present disclosure, if the field indicating the priority is not configured in the DCI, when multiplexing is indicated through the corresponding DCI, the UE may multiplex UCIs corresponding to both the LP and the HP and transmit the multiplexed UCIs (indicated/scheduled to the corresponding DCI) to the base station through the PUCCH.

And, if multiplexing is not indicated through the corresponding DCI, the UE may transmit the UCI corresponding only to the LP (or previously configured LP or HP) to the base station through the PUCCH (indicated/scheduled with the corresponding DCI). Here, the preset priority may be configured differently for each format of the corresponding DCI or for each uplink/downlink type.

When the UE transmits UCIs having different priorities through the PUSCH, whether to multiplex the UCIs may be indicated through the uplink scheduling DCI. For example, whether to multiplex the UCI may be indicated by adding a new bit to the corresponding DCI.

Alternatively, whether to multiplex UCI may be indicated by reusing an existing DCI field (e.g., a beta offset value, etc.). For example, multiplexing may be indicated when the beta offset value exceeds a specific value, and multiplexing may not be indicated when the beta offset value is less than or equal to a specific value.

As an embodiment of the present disclosure, when a field indicating LP or HP is included in the corresponding DCI and the priority indicated through the field is XP (LP or HP), when multiplexing is indicated through the corresponding DCI, the UE may multiplex UCIs corresponding to both the LP and the HP and transmit the multiplexed UCIs to the base station through the PUSCH (instructed/scheduled with the corresponding DCI).

And, if UCI multiplexing is not indicated through the corresponding DCI, UCI corresponding to XP (or LP or HP set in advance regardless of XP) may be transmitted to the base station through PUSCH (indicated/scheduled as the corresponding DCI). Here, priorities configured in advance regardless of XP may be configured differently for each format of the corresponding DCI or for each uplink/downlink type.

As another embodiment of the present disclosure, if the field indicating the priority is not configured in the DCI, when multiplexing is indicated through the corresponding DCI, the UE may multiplex UCIs corresponding to both the LP and the HP and transmit the multiplexed UCIs to the base station through the PUSCH (instructed/scheduled with the corresponding DCI).

And, if multiplexing is not instructed through the corresponding DCI, the UE may transmit the UCI corresponding only to the LP (or previously set LP or HP) to the base station through the PUSCH (indicated by the corresponding DCI). Here, the preset priority may be set differently for each format of the corresponding DCI or for each uplink/downlink type.

In describing the present disclosure, the case where multiplexing is indicated (or configured) through (downlink or uplink scheduling) DCI (or RRC signaling) is referred to as mux-ON, and the case where multiplexing is not indicated (or configured) is referred to as mux-OFF.

That is, when indicated (or configured) as mux-ON, the UE may multiplex both HP UCI and LP UCI on PUSCH or PUCCH and transmit the same. And, when indicated (or configured) as mux-OFF, the UE may transmit either HP UCI or LP UCI through PUSCH or PUCCH.

And, in the present disclosure, the type of UCI to be multiplexed may include at least one of HARQ-ACK, CSI, or SR.

A new bit that may indicate multiplexing included in uplink or downlink scheduling DCI may be configured only in a non-fallback DCI format (e.g., DCI format 0_1 and/or 0_2 and/or 1_1 and/or 1_2). Also, the new bit may be configured only in a DCI format in which a priority index (PI) is configured.

As another example, like PI, the new bit indicating whether to multiplex is configurable (whether to be added/configured to the corresponding DCI) according to the DCI format. If the new bit is not configured, UCI/PUSCH transmission indicated/scheduled by the corresponding DCI may be regarded as mux-OFF, or multiplexing (i.e., mux-ON or mux-OFF) may be configured by higher layer signaling. As another example, whether to multiplex UCI may be indicated only by DCI indicating HP.

Another example of the present disclosure, even if mux-ON/OFF may be indicated through DCI, Mux-ON/OFF for HARQ-ACK and PUSCH transmission indicated/scheduled with semi-statically configured UCI (e.g., periodic CSI, semi-persistent CSI, SR, semi-persistent scheduling (SPS) PDSCH HARQ-ACK, etc.), PUSCH transmission (e.g., configured grant (CG) PUSCH), and fallback DL/UL DCI (i.e., DCI format 0_0 and/or DCI format 1_0) may be difficult to dynamically indicate.

Here, the priority of HARQ-ACK/PUSCH corresponding to fallback DCI may always be configured to LP, P (periodic) / SP(semi-persistent)-CSI, which is a semi-persistent UCI, may be configured to LP, and SR, SPS PDSCH HARQ-ACK, and CG PUSCH may be configured to one of LP and HP (or indicated to one of LP/HP through activation DCI).

As an embodiment of the present disclosure, among semi-persistent UCI, CG PUSCH, and/or DCI indicating the same slot as HARQ-ACK and PUSCH transmission (e.g., UCI/PUSCH transmission that does not correspond to DCI indicated by mux-ON/OFF information) indicated/scheduled as fallback DL/UL DCI as the UCI/PUSCH transmission time point, if DCI (e.g., non-fallback DCI or DCI indicating HP) indicating mux-ON/OFF is received/exists, multiplexing of the semi-persistent UCI, CG PUSCH, and/or fallback DL/UL DCI based HARQ-ACK and PUSCH (e.g., UCI/PUSCH transmission that does not correspond to DCI indicated by mux-ON/OFF information) may be determined by mux-ON/OFF indicated by the DCI. That is, the UE may perform a UCI/PUSCH transmission operation based on mux-ON/OFF determined by the DCI.

As another example, among DCIs indicating the same slot as the semi-persistent UCI, CG PUSCH, fallback DL/UL DCI-based HARQ-ACK, and PUSCH transmission (e.g., UCI/PUSCH transmission that does not correspond to DCI indicated by mux-ON/OFF information) as the UCI/PUSCH transmission time point, DCI (e.g., non-fallback DCI or DCI indicating HP) indicating mux-ON/OFF is not received/does not exist, for the semi-persistent UCI, CG PUSCH, fallback DL/UL DCI based HARQ-ACK and PUSCH (e.g., UCI/PUSCH transmission that does not correspond to DCI indicated by mux-ON/OFF information), UCI/PUSCH transmission may be performed by assuming mux-OFF as default, or one of mux-ON/OFF may be configured as default.

Additionally, in case of SPS HARQ-ACK and/or semi-persistent UCI and/or CG PUSCH (for SPS PDSCH), exceptionally, mux-ON/OFF may be indicated through activation DCI (or RRC signaling or MAC-CE). At this time, the mux-ON/OFF instruction may be applied until released.

Embodiment 2

When multiplexing of different UCIs for one PUSCH or PUCCH channel (or for a subslot to which the corresponding channel belongs) is indicated by a plurality of DCIs, Embodiment 2 relates to a method for determining whether to multiplex the UCI.

Specifically, the UE may configure a PUCCH (i.e., a PUCCH to be transmitted in slot n) including HARQ-ACK information corresponding to PDSCHs scheduled by a plurality of (DL scheduling) DCIs indicated in a specific slot n. That is, there may be a plurality of DL scheduling DCIs corresponding to the PUCCH to be transmitted in the corresponding slot n. When the plurality of DCIs indicate differently whether UCI is multiplexed, based on which DCI, it may not be clear (i.e., ambiguity occurs) whether to perform multiplexing on UCI and configure information to be carried on PUCCH. Example 2 discloses a method to resolve this ambiguity.

As an embodiment of the present disclosure, a multiplexing rule may be determined based on the latest DCI from the UE reception point of view among DCI(s) corresponding to PUCCH and/or PUSCH (alt 1). That is, the UE may determine whether to multiplex UCIs according to mux-ON/OFF indicated by the most recently received DCI.

As another embodiment, when at least one of the plurality of DCIs indicates mux-ON, the UE may perform multiplexing on UCIs having different priorities (alt 2). That is, only when all DCIs indicate mux-OFF, the UE may transmit HP UCI or LP UCI through PUSCH/PUCCH.

As another embodiment, when at least one DCI among a plurality of DCIs indicates mux-OFF, the UE may transmit HP UCI or LP UCI through PUSCH/PUCCH. That is, the UE may multiplex UCIs having different priorities and transmit the multiplexed UCIs through the PUSCH/PUCCH only when all of the plurality of DCIs indicate mux-ON.

As another embodiment of the present disclosure, Multiplexing indication information indicated by DCI(s) corresponding to PUCCH and DCI(s) corresponding to PUSCH may be different from each other. For example, when PUCCH and PUSCH are scheduled to be transmitted in slot n (when simultaneous transmission of PUCCH/PUSCH is not configured/indicated), the UE may piggyback and transmit UCI information to be carried on PUCCH to PUSCH.

Here, as the DL scheduling DCI corresponding to the PUCCH to be transmitted in slot n indicates mux-ON and the UL scheduling DCI corresponding to the PUSCH to be transmitted in slot n indicates mux-OFF, when multiplexing is indicated only for LP UCI, a PUSCH having a relatively low priority may be dropped, and only PUCCH transmission may be permitted.

As another embodiment of the present disclosure, multiplexing may be indicated differently for PUSCHs on a plurality of component carriers (CCs). Here, a rule for selecting a PUSCH to be a UCI piggyback target may be determined only within the PUSCH set for which mux-ON is indicated. Some of the PUSCHs for which mux-ON is indicated may be dropped according to the UCI type and / or processing timeline check. In the above-described manner, the drop of PUSCHs indicated as mux-OFF may be minimized.

As another embodiment of the present disclosure, a multiplexing rule may be determined according to a priority (e.g., it may be indicated as LP or HP, and may be configured to LP if there is no indicator indicating priority in DCI) indicated through DCI and a mux-ON/OFF combination.

For example, priority and mux-ON/OFF combinations may be configured in four ways (LP+mux-ON, LP+mux-OFF, HP+mux-ON and HP+mux-OFF). Here, the multiplexing rule may be determined as a rule for determining whether or not multiplexing is performed according to mux-ON/OFF indicated from a specific DCI, such as alt 1/2/3 described above.

As another example, the multiplexing rule may be determined as a rule for selecting a PUSCH to be a UCI piggyback target only within a PUSCH set (i.e., a set consisting of PUSCHs set to LP+mux-ON and HP+mux-ON) indicated by mux-ON. That is, the UE may perform multiplexing on a PUSCH that satisfies a specific condition such as a processing timeline among the PUSCHs indicated by mux-ON, and may drop a PUSCH that does not satisfy the specific condition.

As another example, multiplexing rules may be determined based on priority (e.g., 'HP+mux OFF'>'LP+mux ON' or 'HP+mux ON'>'LP+mux OFF'). For example, a multiplexing rule may be determined in such a way that mux-ON/OFF corresponding to a high priority UCI (e.g., indicated by a DCI corresponding to an HP UCI) is applied to a low priority UCI.

Embodiment 3

Whether or not UCIs having different priorities are multiplexed may be configured through higher layer signaling (e.g., RRC signaling and/or MAC-CE, etc.). That is, in Embodiment 3, unlike Embodiment 1 in which multiplexing or not is dynamically indicated, complexity of UE implementation may be reduced by indicating multiplexing or not through higher layer signaling.

For example, mux-ON/OFF may be configured for each cell through cell-common RRC and Mux-ON/OFF may be configured differently for each UE (based on UE capability) through UE-specific RRC.

As another example, mux-ON/OFF may be configured independently (e.g., differently) for each serving cell configured for the UE. As another example, mux-ON/OFF may be configured independently (e.g., differently) for each CG configuration index. As another example, mux-ON/OFF may be configured independently (e.g., differently) for each PUCCH resource.

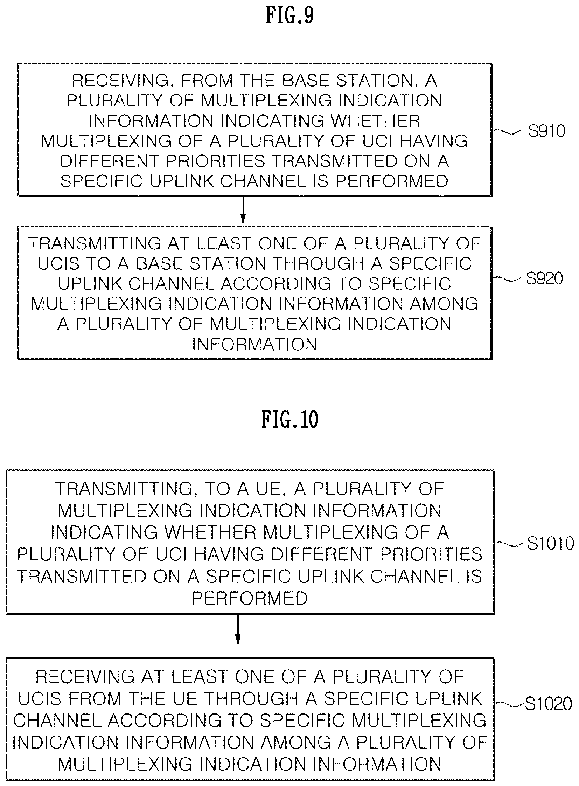

Hereinafter, referring to FIG. 9, a method of transmitting at least one of a plurality of uplink control information (UCI) having different priorities by a UE through an uplink channel will be described.

FIG. 9 is a diagram for describing an uplink transmission operation of a UE according to an embodiment of the present disclosure.

The UE may receive a plurality of multiplexing indication information from the base station indicating whether multiplexing of a plurality of uplink control information (UCI) having different priorities transmitted on a specific uplink channel is performed S910.

Here, the plurality of UCI types may include at least one of HARQ-ACK, SR, or CSI, but is not limited thereto.

According to an embodiment of the present disclosure, at least one of a plurality of multiplexing indication information may be received through one or more DCIs. As another example, the UE may receive a plurality of multiplexing indication information from the base station through higher layer signaling (e.g., RRC or MAC-CE).

Among the plurality of multiplexing indication information, based on the first multiplexing indication information indicating multiplexing and the second multiplexing indication information not indicating multiplexing, the UE may transmit at least one of a plurality of UCIs on a specific uplink channel to the base station according to specific multiplexing indication information among a plurality of multiplexing indication information S920.

For example, whether multiplexing of a plurality of UCIs may be determined based on specific multiplexing indication information included in the most recently received DCI among one or more DCIs. That is, the UE may determine whether to multiplex the plurality of UCIs on the uplink channel according to the multiplexing indication information included in the DCI received last.

As another example, when at least one of a plurality of multiplexing indication information includes multiplexing indication information indicating multiplexing of a plurality of UCIs, the UE may multiplex the plurality of UCIs on a specific uplink channel and transmits the multiplexing information to the base station. That is, only when all of one or more DCIs do not indicate multiplexing of multiple UCIs, the UE may transmit only one of the LP UCI and the HP UCI to the base station through the uplink channel without multiplexing a plurality of UCIs on the uplink channel.

As another example, when even one of the plurality of multiplexing indication information does not indicate multiplexing of the plurality of UCIs, the UE may transmit a first UCI having the highest priority or a second UCI having the lowest priority among a plurality of UCIs to the base station through a specific uplink channel. That is, the UE may multiplex a plurality of UCIs on a specific uplink channel and transmit the multiplexed UCIs to the base station only when all one or more DCIs indicate multiplexing of the plurality of UCIs.

As another embodiment of the present disclosure, one or more DCIs may include a first DCI for scheduling a PDSCH corresponding to HARQ-ACK (hybrid automatic repeat request-acknowledgement) transmitted through a physical uplink control channel (PUCCH) and a second DCI corresponding to a physical uplink shared channel (PUSCH).

Here, based on the indication that the PUSCH and the PUSCH are transmitted in the same slot by the first DCI and the second DCI, the UE may piggyback the UCI to be mapped to the PUCCH among a plurality of UCIs to the PUSCH.

And, based on the first DCI including the first multiplexing indication information and the second DCI including the second multiplexing indication information, the UE may transmit at least one of the plurality of UCIs to the base station through an uplink channel having a higher priority among PUCCH and PUSCH.

For example, it is assumed that the DL scheduling DCI corresponding to the PUCCH to be transmitted in slot n indicates mux-ON, and the UL scheduling DCI corresponding to the PUSCH to be transmitted in slot n indicates mux-OFF. At this time, the UE may drop a PUSCH having a relatively low priority and transmit the PUCCH to the base station.

As another embodiment of the present disclosure, in one or more PUSCHs scheduled by one or more DCIs including multiplexing indication information indicating multiplexing of multiple UCIs among a plurality of multiplexing indication information, the UE may select a PUSCH on which the plurality of UCIs will be piggybacked.

As another embodiment, based on a plurality of UCIs configured to be transmitted based on configurations or indications from the base station other than DCI including multiplexing indication information, the UE may determine whether to multiplex multiple UCIs according to the specific multiplexing indication information included in the DCI indicating the transmission time (or the slot of the transmission time) of the plurality of UCIs among the one or more DCIs including the plurality of multiplexing indication information.

Here, a plurality of UCIs configured to be transmitted based on configurations or indications from a base station other than DCI including multiplexing indication information may include at least one of periodic CSI (channel state information), semi-persistent (SPS) CSI, scheduling request (SR), hybrid automatic repeat and request (HARQ)-acknowledgement (ACK) for SPS PDSCH, or HARQ-ACK corresponding to DCI (or fall back DCI) that does not include multiplexing indication information.

As another example, a plurality of additional UCIs to be transmitted on an uplink channel other than a specific uplink channel may be configured to be transmitted based on a configuration or indication from the base station other than DCI including multiplexing indication information. When the multiplexing indication information is not included in the DCI indicating the transmission timing of the plurality of additional UCIs (or when the non-fallback DCI or the DCI indicating the HP is not received), whether to multiplex the plurality of additional UCIs may be determined according to predefined multiplexing indication information (i.e., default multiplexing indication information or a default value).

For example, the predefined multiplexing indication information (or default value) may include information indicating multiplexing for additional UCI or information not indicating multiplexing. As another example, the predefined multiplexing indication information may be transmitted from the base station to the terminal through higher layer signaling (e.g., RRC or MAC-CE).

As another embodiment of the present disclosure, a UE may receive configuration information for setting whether to multiplex a plurality of UCIs for each serving cell configured for the UE from a base station. As another example, the UE may receive, from the base station, configuration information for configuring whether to multiplex multiple UCIs for each PUCCH resource or each configured grant resource. The UE may determine whether to multiplex a plurality of UCIs on an uplink channel based on configuration information.

FIG. 10 is a diagram for describing an uplink reception operation of a base station according to an embodiment of the present disclosure.

The base station may transmit a plurality of multiplexing indication information indicating whether multiplexing of a plurality of UCIs having priorities transmitted on a specific uplink channel is performed to the terminal (S1010).

As an embodiment of the present disclosure, a base station may transmit one or more DCIs including a plurality of multiplexing indication information to a terminal. As another example, the base station may transmit a plurality of pieces of multiplexing indication information to the terminal through higher layer signaling (e.g., RRC or MAC-CE).

Among the multiplexing indication information, based on the first multiplexing indication information indicating multiplexing and the second multiplexing indication information not indicating multiplexing, the base station may receive at least one of a plurality of UCIs from the UE through a specific uplink channel according to specific multiplexing indication information among a plurality of multiplexing indication information (S1020).

For example, a base station may receive an uplink channel in which a plurality of UCIs are multiplexed from the UE. As another example, the base station may receive an uplink channel including one of HP UCI and LP UCI from the UE. Since the process of determining whether or not multiplexing of a plurality of UCIs is performed by the UE based on the multiplexing indication information (e.g., multiplexing indication information included in DCI or predefined multiplexing indication information (e.g., default value, etc.)) has been described with reference to FIG. 9, repeated description will be omitted.

As another embodiment of the present disclosure, the base station may transmit configuration information for configuring whether to multiplex multiple UCIs for each serving cell configured for the UE to the UE. As another example, the base station may transmit configuration information for configuring whether to multiplex multiple UCIs for each PUCCH resource or each configured grant resource to the terminal. Accordingly, the base station may receive an uplink channel based on configuration information (i.e., an uplink channel multiplexed with a plurality of UCIs or an uplink channel including one of HP UCI and LP UCI) from the UE.

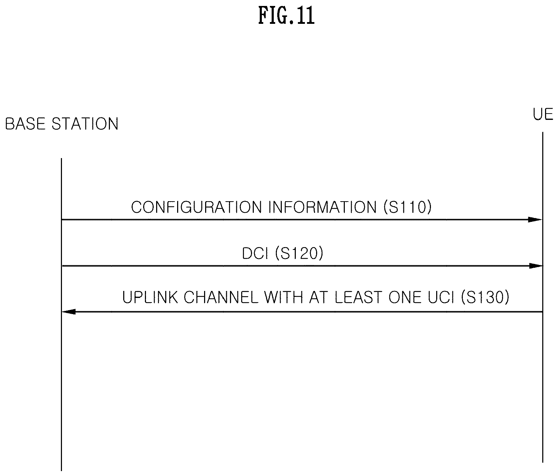

FIG. 11 is a diagram for describing a signaling procedure of a network side and a UE according to the present disclosure.

FIG. 11 illustrates an example of signaling between a network side and a UE in a situation to which the above-described embodiments (e.g., a combination of one or more of Embodiment 1, Embodiment 2, Embodiment 3 or sub-embodiments thereof) of the present disclosure may be applied.

Here, the UE/network side is exemplary and may be applied to various devices as described with reference to FIG. 12. Fig. 11 is for convenience of explanation, and does not limit the scope of the present disclosure.

In addition, some step(s) shown in FIG. 11 may be omitted depending on circumstances and/or configurations. In addition, in the operation of the network side/UE of FIG. 11, the above-described uplink transmission and reception operation may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side.

In addition, although the following description is based on a plurality of TRPs, this may be equally extended and applied to transmission through a plurality of panels/cells, and may also be extended and applied to transmission through a plurality of RRHs/RRUs.

In addition, although it is described based on "TRP" in the following description, as described above, "TRP" may be replaced with an expression of a panel, an antenna array, a cell (e.g., macro cell/small cell/pico cell, etc.), a transmission point (TP), a base station (base station, gNB, etc.) and may be applied. As described above, TRPs may be classified according to information (e.g., CORESET index, ID) on the CORESET group (or CORESET pool) .

For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

In addition, a base station may mean a generic term for an object that transmits and receives data with a terminal. For example, the base station may be a concept including one or more transmission points (TPs), one or more transmission and reception points (TRPs), and the like. Also, the TP and/or the TRP may include a panel of a base station, a transmission and reception unit, and the like.

The UE may receive configuration information related to multiplexing of a plurality of UCIs from the network side (S110).

The configuration information may include information for configuring an indicator for indicating whether multiplexing is performed through a specific DCI field, information for configuring whether to multiplex multiple UCIs for each serving cell, each PUCCH resource, or each configuration grant resource, and the like. In this case, the configuration information may be transmitted through higher layer signaling (e.g., RRC signaling, MAC-CE, etc.). In addition, when the configuration information is defined or configured in advance, the corresponding step may be omitted.

For example, the above-described operation of the UE (100 or 200 in FIG. 12) receiving the configuration information from the network side (200 or 100 of FIG. 12) in step S115 may be implemented by the device of FIG. 12 to be described below. For example, referring to FIG. 12, One or more processors 102 may control one or more transceivers 106 and/or one or more memories 104 to receive the configuration information, and one or more transceivers 106 may receive the configuration information from a network side.

The UE may receive one or more DCIs from the network side (S120) . For example, the one or more DCIs may include a plurality of multiplexing indication information (or indicators) indicating whether to multiplex a plurality of UCIs having different priorities on an uplink channel. As another example, the DCI may include scheduling information for scheduling an uplink to be transmitted by a UE in the future.

For example, an operation in which the UE (100 or 200 of FIG. 12) transmits one or more DCIs to the network side (200 or 100 of FIG. 12) in step S120 described above may be implemented by the device of FIG. 12 to be described below. For example, referring to FIG. 12, One or more processors 102 may control one or more transceivers 106 and/or one or more memories 104 to transmit one or more DCIs, and one or more transceivers 106 may transmit one or more DCIs to a network side.

The UE may transmit an uplink channel including one or more UCIs to the network side based on the received one or more DCIs (S130). For example, an operation in which the UE determines whether to multiplex a plurality of UCIs based on the multiplexing indication information included in the DCI may be performed based on the above-described embodiment (e.g., a combination of one or more of Embodiment 1, Embodiment 2, Embodiment 3 or sub-embodiments thereof) or the like.

For example, the UE may determine whether to multiplex a plurality of UCIs based on multiplexing indication information included in a most recently received DCI among one or more DCIs.

As another example, if even one of one or more DCIs includes multiplexing indication information indicating multiplexing of a plurality of UCIs, the UE may multiplex the plurality of UCIs on an uplink channel and transmit them to the network side.

As another example, if even one of the one or more DCIs includes multiplexing indication information that does not indicate multiplexing of the plurality of UCIs, the UE may transmit one of the HP UCI or the LP UCI among the plurality of UCIs through the uplink channel.

However, this is only one embodiment, and the UE may determine whether or not to multiplex one or more UCIs based on the above-described embodiment (e.g., a combination of one or more of Embodiment 1, Embodiment 2, Embodiment 3 or sub-embodiments thereof) and transmit them to the network through an uplink channel.

For example, an operation in which the UE (100 or 200 of FIG. 12) determines whether to multiplex UCI in step S130 described above may be implemented by the device of FIG. 12. For example, referring to FIG. 12, one or more processors 102 may control one or more memories 104 or the like to perform the above operation.

In addition, the UE (100 or 200 in FIG. 12) in step S130 described above may control one or more transceivers 106 and/or one or more memories 104 to transmit one or more UCIs through an uplink channel, and one or more transceivers 106 may transmit one or more UCIs through an uplink channel to the network side.

As mentioned above, the network side/UE signaling and embodiments (e.g., a combination of one or more of Embodiment 1, Embodiment 2, Embodiment 3 or sub-embodiments thereof) described above may be implemented by an apparatus to be described with reference to FIG. 12. For example, the network side (e.g., TRP 1/TRP 2) may correspond to the first device 100 and the UE may correspond to the second device 200, and vice versa may be considered depending on circumstances.

For example, the network-side/UE signaling and operations described above (e.g., a combination of one or more of Embodiment 1, Embodiment 2, Embodiment 3 or sub-embodiments thereof) may be processed by one or more processors (e.g., 102, 202) of FIG. 12, and the aforementioned network-side/UE signaling and operation (e.g., a combination of one or more of Embodiment 1, Embodiment 2, Embodiment 3 or sub-embodiments thereof) may be stored in a memory (e.g., one or more memories of FIG. 12 (e.g., 104, 204)) in the form of a command/program (e.g., instruction, executable code) for driving at least one processor (e.g., 102 or 202) of FIG. 12.

General Device to which the Present Disclosure may be applied

FIG. 12 is a diagram which illustrates a block diagram of a wireless communication system according to an embodiment of the present disclosure.

In reference to FIG. 12, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR) . A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform uplink transmission in a wireless communication system, the method comprising:

   receiving, from a base station, a plurality of multiplexing indication information indicating whether multiplexing of a plurality of uplink control information (UCI) having different priorities transmitted in a specific uplink channel is performed; and
   based on first multiplexing indication information indicating multiplexing and second multiplexing indication information not indicating multiplexing among the plurality of multiplexing indication information, transmitting, to the base station, at least one of the plurality of UCIs through the specific uplink channel according to specific multiplexing indication information among the plurality of multiplexing indication information.

**2.** The method of claim 1, wherein:
the plurality of multiplexing indication information is received from the base station through at least one downlink control information (DCI).

**3.** The method of claim 2, wherein:
based on the specific multiplexing indication information included in an latest received DCI among the at least one DCI, whether to multiplex the plurality of UCIs is determined.

**4.** The method of claim 2, wherein:
based on at least one of the multiplexing indication information indicating multiplexing of the plurality of UCIs, the plurality of UCIs multiplexed on the specific uplink channel are transmitted to the base station.

**5.** The method of claim 2, wherein:
based on at least one of the plurality of multiplexing indication information not indicating multiplexing for the plurality of UCIs, a first UCI having a highest priority or a second UCI having a lowest priority among the plurality of UCIs is transmitted to the base station through the specific uplink channel.

**6.** The method of claim 2, wherein:

the at least one DCI includes a first DCI for scheduling a physical downlink shared channel (PDSCH) corresponding to an HARQ-ACK (hybrid automatic repeat request-acknowledgement) transmitted through a physical uplink control channel (PUCCH) and a second DCI corresponding to a physical uplink shared channel (PUSCH), and
based on the PUSCH and the PUCCH being indicated to be transmitted in the same slot by the first DCI and the second DCI, a UCI to be mapped to the PUCCH among the plurality of UCIs is piggybacked on the PUSCH.

**7.** The method of claim 6, wherein:
based on the first DCI including the first multiplexing indication information and the second DCI including the second multiplexing indication information, at least one of the plurality of UCIs is transmitted to the base station through an uplink channel having a higher priority among the PUSCH and the PUCCH.

**8.** The method of claim 1, wherein:
in at least one PUSCH scheduled by at least one DCI including multiplexing indication information indicating multiplexing of the plurality of UCIs among the plurality of multiplexing indication information, a PUSCH on which the plurality of UCIs will be piggybacked is selected.

**9.** The method of claim, wherein:
based on the plurality of UCIs being configured to be transmitted based on a configuration or an indication from the base station other than DCIs including multiplexing indication information, whether multiplexing of the plurality of UCIs is determined according to the specific multiplexing indication information included in a specific DCI indicating transmission time of the plurality of UCIs among at least one DCI including the plurality of multiplexing indication information.

**10.** The method of claim 1, wherein:
based on a plurality of additional UCIs to be transmitted on an uplink channel other than the specific uplink channel being configured to be transmitted based on a configuration or an indication from the base station other than DCI including multiplexing indication information and multiplexing indication information being not included in a DCI indicating transmission time of the plurality of additional UCIs, whether multiplexing of the plurality of additional UCIs is determined according to predefined multiplexing indication information.

**11.** The method of claim 9, wherein:
a plurality of UCIs configured to be transmitted based on a configuration or an indication from the base station other than a DCI including the multiplexing indication information includes at least one of periodic channel state information (CSI), semi-persistent (SPS) CSI, SR (scheduling request), hybrid automatic repeat and request (HARQ)-acknowledgement (ACK) for SPS PDSCH, or HARQ-ACK corresponding to DCI not including the multiplexing indication information.

**12.** The method of claim 1, wherein:

configuration information for configuring whether to multiplex the plurality of UCIs for each of at least one of a serving cell, a PUCCH resource, or a configured grant resource configured for the UE is received from the base station.

13. A user equipment (UE) performing uplink transmission in a wireless communication system, the UE comprising:

at least one transceiver; and
at least one processor coupled to the at least one transceiver;
wherein the at least one processor is configured to:

receive, from a base station through the at least one transceiver, a plurality of multiplexing indication information indicating whether multiplexing of a plurality of uplink control information (UCI) having different priorities transmitted in a specific uplink channel is performed; and
based on first multiplexing indication information indicating multiplexing and second multiplexing indication information not indicating multiplexing among the plurality of multiplexing indication information, transmit, to the base station through the at least one transceiver, at least one of the plurality of UCIs through the specific uplink channel according to specific multiplexing indication information among the plurality of multiplexing indication information.

14. A method for performing uplink reception by a base station in a wireless communication system, the method comprising:

transmitting, to a user equipment (UE), a plurality of multiplexing indication information indicating whether multiplexing of a plurality of uplink control information (UCI) having different priorities transmitted in a specific uplink channel is performed; and
based on first multiplexing indication information indicating multiplexing and second multiplexing indication information not indicating multiplexing among the plurality of multiplexing indication information, receiving, from the UE, at least one of the plurality of UCIs through the specific uplink channel according to specific multiplexing indication information among the plurality of multiplexing indication information.

15. A base station for performing uplink reception in a wireless communication system, the base station comprising:

at least one transceiver; and
at least one processor coupled to the at least one transceiver;
wherein the at least one processor is configured to:

transmit, to a user equipment (UE) through the at least one transceiver, a plurality of multiplexing indication information indicating whether multiplexing of a plurality of uplink control information (UCI) having different priorities transmitted in a specific uplink channel is performed; and
among the plurality of multiplexing indication information, based on first multiplexing indication information indicating multiplexing and second multiplexing indication information not indicating multiplexing, receive, from the UE through the at least one transceiver, at least one of the plurality of UCIs through the specific uplink channel according to specific multiplexing indication information among the plurality of multiplexing indication information.

16. A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor;
the operations include:

receiving, from a base station, a plurality of multiplexing indication information indicating whether multiplexing of a plurality of uplink control information (UCI) having different priorities transmitted in a specific uplink channel is performed; and
based on first multiplexing indication information indicating multiplexing and second multiplexing indication information not indicating multiplexing among the plurality of multiplexing indication information, transmitting, to the base station, at least one of the plurality of UCIs through the specific uplink channel according to specific multiplexing indication information among the plurality of multiplexing indication information.

17. At least one non-transitory computer readable medium storing at least one instruction,
based on the at least one instruction being executed by at least one processor, an apparatus for performing uplink transmission in a wireless communication system controls to:

receive, from a base station, a plurality of multiplexing indication information indicating whether multiplexing of a plurality of uplink control information (UCI) having different priorities transmitted in a specific uplink channel is performed; and
based on first multiplexing indication information indicating multiplexing and second multiplexing indication information not indicating multiplexing among the plurality of multiplexing indication information, transmit, to the base station, at least one of the plurality of UCIs through the specific uplink channel according to specific multiplexing indication information among the plurality of multiplexing indication information.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 · · · · ·

k=0

# FIG.6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH — S601

PDCCH/ PDSCH (BCCH) — S602

PRACH — S603

PDCCH/ PDSCH — S604

PUSCH — S605

PDCCH/ PDSCH — S606

PDCCH/ PDSCH — S607

PUSCH/ PUCCH — S608

· DL/UL ACK/NACK
· UE CQI/PMI RI REPORT USING PUSCH AND PUCCH

## FIG.7

## FIG.8

DL assingment-to-PDSCH offset(K0)

PDSCH-to-HARQ-ACK reporting offset(K1)

(a)

UL grant-to-PUSCH offset(K2)

(b)

## FIG.9

RECEIVING, FROM THE BASE STATION, A PLURALITY OF MULTIPLEXING INDICATION INFORMATION INDICATING WHETHER MULTIPLEXING OF A PLURALITY OF UCI HAVING DIFFERENT PRIORITIES TRANSMITTED ON A SPECIFIC UPLINK CHANNEL IS PERFORMED — S910

TRANSMITTING AT LEAST ONE OF A PLURALITY OF UCIS TO A BASE STATION THROUGH A SPECIFIC UPLINK CHANNEL ACCORDING TO SPECIFIC MULTIPLEXING INDICATION INFORMATION AMONG A PLURALITY OF MULTIPLEXING INDICATION INFORMATION — S920

## FIG.10

TRANSMITTING, TO A UE, A PLURALITY OF MULTIPLEXING INDICATION INFORMATION INDICATING WHETHER MULTIPLEXING OF A PLURALITY OF UCI HAVING DIFFERENT PRIORITIES TRANSMITTED ON A SPECIFIC UPLINK CHANNEL IS PERFORMED — S1010

RECEIVING AT LEAST ONE OF A PLURALITY OF UCIS FROM THE UE THROUGH A SPECIFIC UPLINK CHANNEL ACCORDING TO SPECIFIC MULTIPLEXING INDICATION INFORMATION AMONG A PLURALITY OF MULTIPLEXING INDICATION INFORMATION — S1020

## FIG.11

BASE STATION                                                                UE

CONFIGURATION INFORMATION (S110)

DCI (S120)

UPLINK CHANNEL WITH AT LEAST ONE UCI (S130)

EP 4 280 770 A1

# FIG.12

## INTERNATIONAL SEARCH REPORT

International application No.

**PCT/KR2022/000534**

| A. | CLASSIFICATION OF SUBJECT MATTER |
|---|---|

**H04W 72/12**(2009.01)i; **H04L 5/00**(2006.01)i; **H04L 1/18**(2006.01)i; **H04L 1/16**(2006.01)i; **H04L 1/00**(2006.01)i

According to International Patent Classification (IPC) or to both national classification and IPC

| B. | FIELDS SEARCHED |
|---|---|

Minimum documentation searched (classification system followed by classification symbols)

H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: intra, UE, multiplexing, priority, UCI, DCI, PUSCH, PUCCH, piggyback

| C. | DOCUMENTS CONSIDERED TO BE RELEVANT |
|---|---|

| Category* | Citation of document, with indication, where appropriate, of the relevant passages | Relevant to claim No. |
|---|---|---|
| X <br> Y <br> A | INTEL CORPORATION. On Intra-UE Multiplexing and Prioritization for Release 17 URLLC/IIoT. R1-2 008987, 3GPP TSG RAN WG1 Meeting #103-E, e-Meeting. 01 November 2020. <br> See sections 3 and 6. | 1-2,4,12-17 <br> 3,5 <br> 6-11 |
| Y | XIAOMI. Intra-UE multiplexing/prioritization for URLLC/IIoT. R1-2007901, 3GPP TSG RAN WG1 #10 3, e-Meeting. 01 November 2020. <br> See section 2.1. | 3 |
| Y | CMCC. Discussion on intra-UE multiplexing/prioritization. R1-2008009, 3GPP TSG RAN WG1 #103-e, e-Meeting. 01 November 2020. <br> See section 2. | 5 |
| A | QUALCOMM INCORPORATED. Intra-UE multiplexing and prioritization for IOT and URLLC. R1-200 9260, 3GPP TSG RAN WG1 #103-e, e-Meeting. 01 November 2020. <br> See section 3. | 1-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2022** | **18 April 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/000534**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0142526 A (WILUS INSTITUTE OF STANDARDS AND TECHNOLOGY INC.) 22 December 2020 (2020-12-22)<br>See paragraphs [0138]-[0183]; and figures 14-18. | 1-17 |

Form PCT/ISA/210 (second sheet) (July 2019)

## INTERNATIONAL SEARCH REPORT
### Information on patent family members

International application No.

**PCT/KR2022/000534**

| Patent document cited in search report | | | Publication date (day/month/year) | Patent family member(s) | | | Publication date (day/month/year) |
|---|---|---|---|---|---|---|---|
| KR | 10-2020-0142526 | A | 22 December 2020 | CN | 112106316 | A | 18 December 2020 |
| | | | | EP | 3793114 | A1 | 17 March 2021 |
| | | | | JP | 2021-533589 | A | 02 December 2021 |
| | | | | US | 11102806 | B2 | 24 August 2021 |
| | | | | US | 2021-0092762 | A1 | 25 March 2021 |
| | | | | US | 2021-0337579 | A1 | 28 October 2021 |
| | | | | WO | 2019-216729 | A1 | 14 November 2019 |

Form PCT/ISA/210 (patent family annex) (July 2019)